# EUROPEAN PATENT APPLICATION

(11) **EP 3 687 209 A1**
(43) Date of publication of application: **29.07.2020**
(21) Application number: 19153781.0
(22) Date of filing: 25.01.2019
(51) Int. Cl.: H04W 12/10, H04L 29/06

(54) **SECURE MULTI-HOP COMMUNICATION PATHS**

(71) Applicant: Siemens Aktiengesellschaft, 80333 München (DE)
(72) Inventor: Falk, Rainer, 85586 Poing (DE); Fischer, Kai, 85598 Baldham (DE); Fries, Steffen, 85598 Baldham (DE); Furch, Andreas, 85354 Freising (DE); Heintel, Markus, 81377 München (DE); Papagudi Subrahmanyam, Niranjana, 81829 München (DE); Sel, Tolga, 80809 München (DE)

(57) **Abstract**

A node (110, 121, 122, 123, 124, 125, 126, 130) of the multi-hop network stores information on one or more secure multi-hop communication paths through the multi-hop network. According to the stored information, the node (110, 121, 122, 123, 124, 125, 126, 130) restricts the communication of data to the secure multi-hop communication paths.

## Description

The present disclosure relates to devices, systems and methods for controlling communication of data in a multi-hop network.

Known from the prior art are the following documents:
US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 2891266 B1, EP 2961091 A1, EP 2961093 A1, EP 3028140 B1, EP 2930610 B1, EP 2940620 B1, EP 2899714 A1, EP 2981926 A0, EP 3125492 B1, EP17195125, EP17211075, EP18178316, EP18156084, EP18151345, EP18167702, EP18153594, EP18162050, EP18178498, EP18152117, EP18150133, EP18169145, EP17210647, EP18150146, EP18167486, EP18168670, EP18162049, EP17203819, EP18157168, EP18169421, EP17210253, EP17205224, EP18169269, EP18169254, EP17210288, EP18153025, EP17200614, EP18156308, EP17201758, EP18156511, EP18159485, EP17203573, EP 17175275, EP17186826, WO 2018069271 A1, PCT/EP2017/082508, EP17179823, WO 2017050348 A1, WO 2018068965 A1 and US 8 843 761 B2.

In data networks, it is known that data is communicated via multiple intermediate nodes. This type of network topology is also referred to as multi-hop network. Typically, a forwarding node in the multi-hop network has multiple possibilities of forwarding the data to a next hop node, which results in a variety of possible multi-hop communication paths through the multi-hop network. Such multi-hop communication paths may differ in their characteristics. Accordingly, it is difficult to ensure that the multi-hop communication path, which is actually used for communication of data from a first end node to a second end node, meets desired security criteria. Accordingly, there is a need for technologies that allow for efficiently ensuring security of data communication in a multi-hop network.

In view of the above need, the present disclosure provides a node for a multi-hop network as defined in claim 1, a control node for a multi-hop network as defined in claim 8, a method as defined in claim 14, and a method as defined in claim 15. The dependent claims define further embodiments.

According to an embodiment, a node for a multi-hop network is provided. The node is configured to:
- store information on one or more secure multi-hop communication paths through the multi-hop network, and
- according to the stored information, restrict the communication of data to the one or more secure multi-hop communication paths.

In this way, the node enables predefining at least one secure multi-hop communication path, which ensures that communication of data on the multi-hop communication path meets certain security criteria. The information on the one or more secure multi-hop communication paths can for example be provided in the form of a configurable whitelist. In such whitelist each of the secure multi-hop communication paths may be identified in terms of its intermediate nodes.

According to an embodiment, the node is configured to determine at least a part of the information on the one or more secure multi-hop communication paths based on security policy information. In this way, the node may efficiently learn the information, e.g., in an initial setup phase. In addition or as an alternative, the learning of the information may also be triggered by changes in the multi-hop network, such as removal or addition of a node or reconfiguration of a node.

According to an embodiment the security policy information comprises at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information about a security state required for a forwarding node, e.g., in terms of a patch level of the forwarding node; and information on a path monitoring capability required for a forwarding node on a secure multi-hop communication path, e.g., whether the forwarding node is allowed to make information on data communicated on the multi-hop communication path available to other nodes. Based on this information, desired security features of the secure multi-hop communication paths can be defined in a flexible and efficient manner.

According to an embodiment, integrity of the security policy information is protected by a cryptographic integrity check function, e.g., by a cryptographic checksum, digital signature, or a cryptographic message authentication code (MAC), which may be based on a hash function or the like. In this way, the security policy information can be efficiently propagated to nodes of the multi-hop network while at the same time avoiding manipulation of the security policy information.

According to an embodiment, the node is configured to determine the information on the one or more secure multi-hop communication paths by probing multi-hop communication paths through the multi-hop network and comparing information obtained by said probing to the security policy information. For example, the node may probe a path segment to a potential next hop node, and if the path segment meets requirements indicated by the security policy information, store the node as an allowed next hop node. Accordingly, the node may store the information on the one or more secure multi-hop communication paths in terms of one or more allowed next hop nodes.

According to an embodiment, the node is configured to indicate at least a part of the determined information to another node of the multi-hop network or to a control node, e.g., such as a node of a network management system. In this way, multiple nodes may efficiently cooperate in the learning of the information on the one or more secure multi-hop communication paths.

According to an embodiment, the node is configured to:
- monitor communication of data on at least one multi-hop communication path, and
- indicate information obtained by said monitoring to another node of the multi-hop network or to a control node.

In this way, the node may enable auditing or other monitoring of the communication of data in the multi-hop network. This monitoring may further assist in determining the one or more secure multi-hop communication paths, e.g., by using the monitored information as a basis for determining or adapting the security policy information. Further, the monitored information may be used to verify that data is actually transmitted on a secure multi-hop communication path, thereby further supporting auditability of security of data communication.

According to a further embodiment, a control node for a multi-hop network is provided. The control node may for example be a node of a network management system. The control node is configured to:
- determine information on one or more secure multi-hop communication paths through the multi-hop network; and
- provide the information on the one or more secure multi-hop communication paths to nodes of the multi-hop network.

In this way, the control node enables predefining at least one secure multi-hop communication path, which ensures that communication of data on the multi-hop communication path meets certain security criteria. The information on the one or more secure multi-hop communication paths can for example be provided in the form of a whitelist and/or in the form of security policy information that enables the nodes to learn a whitelist.

According to an embodiment, the control node is configured to provide security policy information to one or more of the nodes. The security policy information enables the nodes to determine at least a part of the information on the one or more secure multi-hop communication paths. In this way, the control node may efficiently enable learning of the information by the nodes, e.g., in an initial setup phase. In addition or as an alternative, the learning of the information may also be triggered by changes in the multi-hop network, such as removal or addition of a node or reconfiguration of a node.

According to an embodiment, the security policy information provided by the control node comprises at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information in a security state required for a forwarding node, e.g., in terms of a patch level of the forwarding node; and information on a path monitoring capability required for a forwarding node on a secure multi-hop communication path, e.g., whether the forwarding node is allowed to make information on data communicated on the multi-hop communication path available to other nodes. Based on this information, desired security features of the secure multi-hop communication paths can be defined in a flexible and efficient manner.

According to an embodiment, integrity of the security policy information is protected by a cryptographic integrity check function, e.g., by a cryptographic checksum, a digital signature, or a cryptographic MAC, which may be based on a hash function or the like. In this way, the security policy information can be efficiently propagated to nodes of the multi-hop network while at the same time avoiding manipulation of the security policy information.

According to an embodiment, the control node is configured to:
- receive information from one or more nodes of the multi-hop network, and
- determine the information on the one or more secure multi-hop communication paths based on the received information. The received information may be based on probing of multi-hop communication paths by the one or more nodes and/or on monitoring communication of data on at least one multi-hop communication path. In this way, the information on the one or more secure multi-hop communication paths may be efficiently determined by cooperation of the control node with the one or more other nodes.

According to a further embodiment, a first method of controlling communication of data in a multi-hop network is provided. The first method comprises:
- a node of the multi-hop network storing information on one or more secure multi-hop communication paths through the multi-hop network, and
- according to the stored information, the node restricting the communication of data to the one or more secure multi-hop communication paths.

According to an embodiment of the first method, the node determines at least a part of the information on the one or more secure multi-hop communication paths based on security policy information.

According to an embodiment of the first method, the security policy information comprises at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information on the security state required for a forwarding node, e.g., in terms of a patch level of the forwarding node; and information on a path monitoring capability required for a forwarding node on a secure multi-hop communication path, e.g., whether the forwarding node is allowed to make information on data communicated on the multi-hop communication path available to other nodes.

According to an embodiment of the first method, integrity of the security policy information is protected by a cryptographic integrity check function, e.g., by a cryptographic checksum, a digital signature, or a cryptographic MAC, which may be based on a hash function or the like.

According to an embodiment of the first method, the node determines the information on the one or more secure multi-hop communication paths by probing multi-hop communication paths through the multi-hop network and comparing information obtained by said probing to the security policy information. For example, the node may probe a path segment to a potential next hop node, and if the path segment meets requirements indicated by the security policy information, store the node as an allowed next hop node. Accordingly, the node may store the information on the one or more secure multi-hop communication paths in terms of one or more allowed next hop nodes.

According to an embodiment of the first method, the node indicates at least a part of the determined information to another node of the multi-hop network or to a control node, e.g., such as a node of a network management system.

According to an embodiment of the first method, the node monitors communication of data on at least one multi-hop communication path and indicates information obtained by said monitoring to another node of the multi-hop network or to a control node.

According to a further embodiment, a second method of controlling communication of data in a multi-hop network is provided. The second method comprises:
- a control node determining information on one or more secure multi-hop communication paths through the multi-hop network; and
- the control node providing the information on the one or more secure multi-hop communication paths to nodes of the multi-hop network.

According to an embodiment of the second method, the control node provides security policy information to one or more of the nodes. The security policy information enables the nodes to determine at least a part of the information on the one or more secure multi-hop communication paths.

According to an embodiment of the second method, the security policy information provided by the control node comprises at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information on a security state required for a forwarding node, e.g., in terms of a patch level of the forwarding node; and information on a path monitoring capability required for a forwarding node on a secure multi-hop communication path, e.g., whether the forwarding node is allowed to make information on data communicated on the multi-hop communication path available to other nodes. Based on this information, desired security features of the secure multi-hop communication paths can be defined in a flexible and efficient manner.

According to an embodiment of the second method, integrity of the security policy information is protected by a cryptographic integrity check function, e.g., by a cryptographic checksum, a digital signature, or a cryptographic MAC, which may be based on a hash function or the like.

According to an embodiment of the second method, the control node receives information from one or more nodes of the multi-hop network and determines the information on the one or more secure multi-hop communication paths based on the received information. The received information may be based on probing of multi-hop communication paths by the one or more nodes and/or on monitoring communication of data on at least one multi-hop communication path.

In the following, embodiments of the present disclosure will be described in more detail and with reference to the accompanying drawings.
- Fig. 1: schematically illustrates a multi-hop network in which communication of data is controlled according to an embodiment of the present disclosure.
- Fig. 2: schematically illustrates an exemplary application scenario in which communication of data is controlled according to an embodiment of the present disclosure.
- Fig. 3: schematically illustrates determination of a secure multi-hop communication path according to an embodiment of the present disclosure.
- Fig. 4: schematically illustrates switching between secure multi-hop communication paths according to an embodiment of the present disclosure.
- Fig. 5: shows a flowchart for schematically illustrating a method according to an embodiment of the present disclosure.
- Fig. 6: shows a flowchart for schematically illustrating a further method according to an embodiment of the present disclosure.
- Fig. 7: shows a block diagram for schematically illustrating structures of a device according to the present disclosure.

It is noted that in the following detailed description of embodiments the accompanying drawings are only schematic and that the illustrated elements are not necessarily shown to scale. Rather, the drawings are intended to illustrate functions and cooperation of components. Here, it is to be understood that any connection or coupling of functional blocks, devices, components, or other physical or functional elements could also be implemented by an indirect connection or coupling, e.g., via one or more intermediate elements. A connection or coupling of elements or components can for example be implemented by a wire-based, a wireless connection, and/or a combination of a wire-based and a wireless connection. Functional blocks can be implemented by dedicated hardware, by firmware and/or software installed on programmable hardware, and/or by a combination of dedicated hardware and firmware or software.

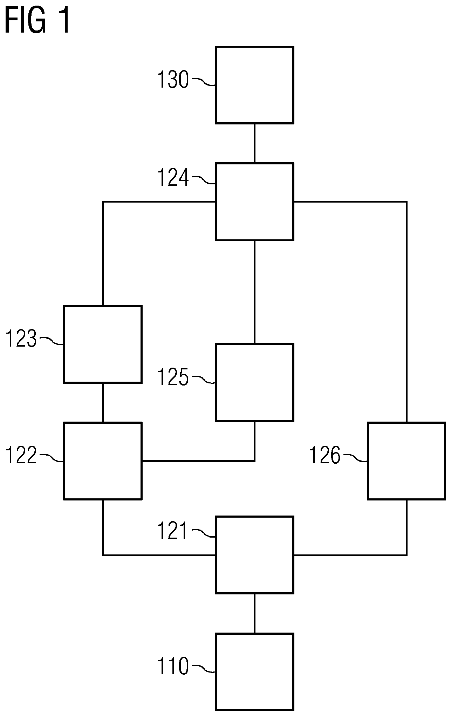

Fig. 1 schematically illustrates a multi-hop network. In the illustrated example, the multi-hop network includes a first end node 110, multiple potential forwarding nodes 121, 122, 123, 124, 125, 126, and a second end node 130. The forwarding nodes 121, 122, 123, 124, 125, 126 may for example correspond to routers, switches, gateways, nodes for wireless or wire-based network access, proxy nodes, or the like. The first end node 110 and the second end node 130 may correspond to various types of field devices. For example, the second end node 130 could be a device or system which is remotely controlled or managed by the first end node 110. In another example, the first end node 110 and the second end node 130 could correspond to end terminals of a communication system.

As can be seen, various multi-hop communication paths can be used for communicating data from the first end node 110 to the second end node 130: a first path extending via the forwarding nodes 121, 122, 123, and 124; a second path extending via the forwarding nodes 121, 122, 125, and 124; and a third path extending via the forwarding nodes 121, 126, and 124. In the illustrated concepts, it is assumed that one or more of these multi-hop communication paths are classified as "secure", and that communication of data between the first end node 110 and the second end node 130 is allowed only using the secure multi-hop communication paths. Information indicating the secure multi-hop communication paths is stored in the nodes 110, 121, 122, 123, 124, 125, 126. In the illustrated example, it is assumed that this information is stored in the form of a whitelist. A multi-hop communication path indicated by the whitelist is allowed to be used for communication of data, while all other multi-hop communication paths are not allowed. However, it is noted that other ways of storing the information on the secure multi-hop communication paths could be used as well, e.g., a blacklist indicating multi-hop communication paths which are not allowed, with all other multi-hop communication paths being considered as secure and allowed.

In the illustrated concepts, enforcement of utilizing only the secure multi-hop communication paths may be implemented in the forwarding nodes 121, 122, 123, 124, 125, 126. In particular, in each of the forwarding nodes 121, 122, 123, 124, 125, 126 the information on the secure multi-hop communication paths may be configured in terms of allowed next hop nodes. When for example assuming that the above-mentioned first multi-hop communication path and the above-mentioned third multi-hop communication path are classified as secure, whereas the above-mentioned second multi-hop communication path is not classified as secure. In this example, the information on the secure multi-hop communication paths could be stored as follows: The forwarding node 121 could store information indicating that only the forwarding nodes 122 and 126 are allowed next hop nodes. The forwarding node 122 could store information indicating that only the forwarding node 123 is an allowed next hop node. The forwarding node 123 could store information indicating that only the forwarding node 124 is an allowed next hop node. The forwarding node 126 could store information indicating that only the forwarding node 124 is an allowed next hop node.

The nodes 110, 121, 122, 123, 124, 125, 126, 130 may determine the information on the secure multi-hop communication paths using a learning process based on security policy information. In particular, each node 110, 121, 122, 123, 124, 125, 126, 130 may determine whether a path segment to a neighboring node meets one or more requirements defined by the security policy information and, if this is the case, classify the neighboring node as an allowed next hop node and store this information. This process may also be referred to as probing of neighboring nodes or path segments. The learning process may be performed at initial setup of the multi-hop network, in response to changes of the multi-hop network, e.g., by addition, removal, or reconfiguration of a node, and/or in response to changes of the security policy information. The requirements defined by the security policy information may for example relate to security features of the neighboring node or path segment, to reliability of the neighboring node or path segment, or to delay characteristics of the neighboring node or path segment.

The security policy information may include the following:
- Identification information of one or more forwarding nodes, e.g., in terms of a network address like an IP (Internet Protocol) address or a machine certificate. By this information, the security policy may explicitly identify a forwarding node which meets the desired security requirements. In some cases, the security policy information may also include a security attestation of the identified node.
- Information on geographical location of one or more forwarding nodes. For example, the security policy information may indicate a geographical region, e.g., a certain country, and forwarding nodes located in that region may be regarded as meeting a security requirement. This type of information may for example enforce a security policy according to which a multi-hop communication path is deemed as secure if all its forwarding nodes are located in a certain country.
- Information on one or more communication technologies or one or more modes of a communication technology required to be supported by a forwarding node.
- Information on one or more communication protocols required to be supported by a forwarding node.
- Information on security capabilities or options, e.g., whether encryption, integrity protection, and/or replay protection is required to be active on a forwarding node. These security capabilities or options may be defined separately for different types of forwarding nodes, e.g., depending on whether the forwarding node is a transition or access node at an edge of a network domain or an intermediate node within a network domain.
- Information on one or more security protocols required to be utilized by a forwarding node, e.g., MACsec, IPsec, TLS, cipher suite (cryptographic algorithm or mode) required to be utilized by a forwarding node, authentication protocol required to be utilized by a forwarding node, key exchange protocol required to be utilized by a forwarding node, required key update intervals, revocation status of the utilized keys, lengths of the utilized session or authentication key, e.g., in terms of a minimum key length or effective key length, if for example key space is limited by optional configuration. These security protocol requirements may be defined separately for different types of forwarding nodes, e.g., depending on whether the forwarding node is a transition or access node at an edge of a network domain or an intermediate node within a network domain.
- Information on monitoring or auditing capabilities of a forwarding node. This may include an indication whether monitoring or auditing is allowed or required on the multi-hop communication path. In some cases, a security policy may explicitly allow passive monitoring on an integrity protected connection or may explicitly allow active monitoring of encrypted connections. The information on monitoring or auditing capabilities of a forwarding node may also include information on allowed monitoring instances, e.g., indicating which component types are allowed to perform monitoring of data communicated on a multi-hop communication path. In some scenarios a forwarding node may indicate parameters or other information related to data communicated on a multi-hop communication path to an audit server. The audit server may then use this information to verify that the data was actually transmitted on the desired multi-hop communication path. Alternatively or in addition, the forwarding nodes on the multi-hop communication path may compute and propagate a cryptographic checksum, a hash function, or similar cryptographic integrity check function. For example, each node could compute a cryptographic checksum from a forwarded message, an identifier of the forwarding node, e.g., a network address, and a previous cryptographic checksum received together with the forwarded message. In this way, a chain of cryptographic checksums or hash chain can be constructed, which allows for uniquely verifying that the message was transmitted over a certain multi-hop communication path. In some scenarios, the hash chain may also be based on a secret key, e.g., may be implemented as a keyed hash like HMAC-SHA-256 or the like.

For enabling learning of the secure multi-hop communication paths, the security policy information may be provided to the nodes 110, 121, 122, 123, 124, 125, 126, 130 of the multi-hop network. For example, a centralized control node, e.g., a node of a network management system, could provide the security policy information to at least some of the nodes 110, 121, 122, 123, 124, 125, 126, 130. Further, the security policy information could be propagated from one node to another node of the multi-hop network. To prevent manipulation of the security policy information, the security policy information may be integrity protected, e.g., by a cryptographic checksum, hash, digital signature, or similar cryptographic integrity protection function. The security policy information may be configured statically or dynamically in response to a need to setup a connection between the first end node 110 and the second end node 130.

In some scenarios, the first end node 110, or an intermediate forwarding node 121, 122, 123, 124, 125, 126 can be provided with different security policy information for different second end nodes 130. In this way, the secure multi-hop communication paths may be configured individually depending on the second end node 130.

In some scenarios, certain forwarding nodes may indicate guaranteed security features of the forwarding node to a public directory service. Such information may then in turn be used for determining the security policy information for the selection and/or learning of a multi-hop communication path.

In some scenarios, a forwarding node may implement a rendezvous server linking a first part and a second part of the multi-hop communication path. For example, such rendezvous server could be implemented by the forwarding node 123. The rendezvous node is reachable both from the first end node 110 and from the second end node 130. The rendezvous server may check both the first part and the second part of the multi-hop communication path based on the security policy information and, in response to both parts meeting the requirements defined by the security policy information, declare the multi-hop communication path as secure. Alternatively, such a check could also be implemented at the first end node 110 or at the second end node 130.

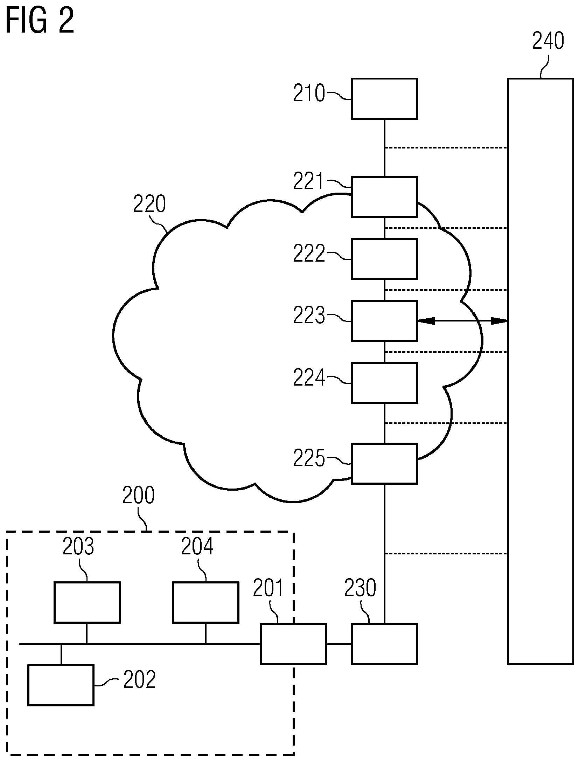

Fig. 2 illustrates an exemplary scenario in which the illustrated concepts are applied for controlling an automation network 200 by a cloud application on a backend node 210. In the illustrated example, it is assumed that the backend node 210 communicates through a public network 220, e.g., based on the Internet, a Wireless Local Area Network, and/or a cellular network, with a certain field device 202, 203, 204 in the automation network 200. This occurs through a first network transition node 221 providing the backend node 210 with access to the public network 220, intermediate forwarding nodes 222, 223, 224 within the public network 220, a second network transition node 225 connecting the automation network 200 to the public network 220. In the illustrated example, it is assumed that the connection of the automation network 200 to the public network 220 is provided through a firewall 201 and a VPN (Virtual Private Network) service 230. However, it is noted that the VPN service 230 and/or the firewall 201 could be omitted in other implementations.

In the application scenario of Fig. 2, the illustrated concepts may be used for ensuring that the multi-hop communication path through the public network 220 meets certain security requirements, by configuring the forwarding nodes in the public network with a whitelist of secure multi-hop communication paths. In such configurable whitelist, the secure multi-hop communication paths may be identified in terms of forwarding (or intermediate) nodes on the multi-hop communication path. As indicated by dotted lines, the configuration and enforcement of the whitelist may be managed or controlled by a control node 240, e.g., a node of a network management system. In the illustrated example, the intermediate forwarding node 223 may act as the above-mentioned rendezvous server and check a first part of the multi-hop communication path, extending between the backend node 210 and the intermediate forwarding node 223, and a second part of the multi-hop communication path, extending between the intermediate forwarding node 223 and the field device 202, 203, 204 in the automation network 200, in view of the specified security policy information. The result of the check may then be indicated to the control node 240, which configures the individual forwarding nodes 221, 222, 223, 224, 225 accordingly.

Another application scenario involves monitoring or auditing of communication connections. If the data communicated over the communication connection are merely integrity-protected, this monitoring can be passive and involve extracting a part of the communicated data or parameters of the communicated data. If the data communicated over the communication connection are merely encrypted, this monitoring can be active and involve decrypting the communicated data. By enforcing utilization of a secure multi-hop communication path, it can be ensured that only components meeting certain security requirements have access to the monitored data.

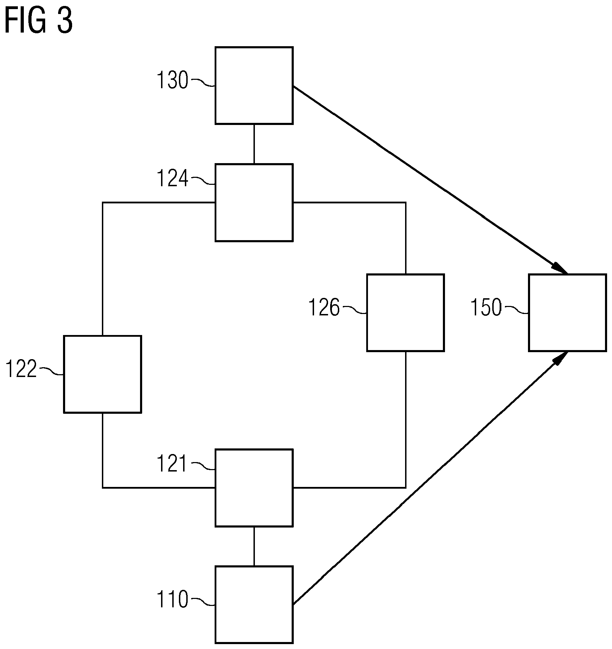

Fig. 3 illustrates a variant of the learning process. In the example of Fig. 3, the learning process includes an evaluation phase in which multiple multi-hop communication paths are operated in a redundant manner and compared to each other. For example, these multiple multi-hop communication paths may include a first multi-hop communication path which was already classified as secure and one or more additional candidate multi-hop communication paths. In the example of Fig. 3, it is assumed that the evaluation phase is used to compare the above-mentioned first multi-hop communication path and the above-mentioned third multi-hop communication path. For the sake of a better overview not all nodes of Fig. 1 are shown in Fig. 3. The first end node 110 and/or the second end node 130 may compare the two multi-hop communication paths based on data redundantly received over both multi-hop communication paths and indicate the result to a node 150 of a network management system or a similar control node. Depending on the comparison, the node 150 may configure the whitelist, which may involve adding one or more of the multi-hop communication paths to the whitelist or removing one or more of the multi-hop communication paths from the whitelist.

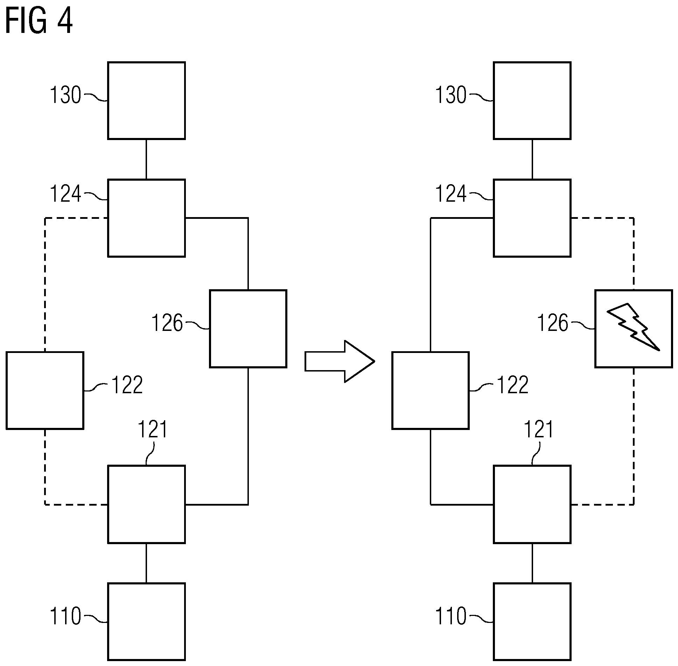

In some scenarios, the whitelist may also be used for controlling handovers of data connections in a predictive manner. Fig. 4 illustrates a corresponding example. The example of Fig. 4 assumes that both the above-mentioned first multi-hop communication path and the third multi-hop communication path are classified as secure and available. For the sake of a better overview not all nodes of Fig. 1 are shown in Fig. 4. As illustrated on the left hand part of the figure by solid lines, initially the third multi-hop communication path is used for providing a data connection between the first end node 110 and the second end node 130, while the first multi-hop communication path is used as a backup. When the third multi-hop communication path becomes unavailable, e.g., due to maintenance or failure of the forwarding node 126, the data connection can be handed over to another multi-hop communication path from the whitelist. As illustrated on the right hand part of the figure by solid lines, the example of Fig. 4 assumes that the data connection is handed over to the first multi-hop communication path, thereby avoiding utilization of the unavailable forwarding node 126.

In some scenarios, the whitelist of secure multi-hop communication paths may also be supplemented by a handover whitelist indicating allowed handovers between secure multi-hop communication paths on the whitelist. In this way, switching between different network topologies may be performed in a step-wise and controlled manner, such that only a limited number of forwarding nodes is changed at the same time and/or such that load conditions in the network change in a well-defined manner.

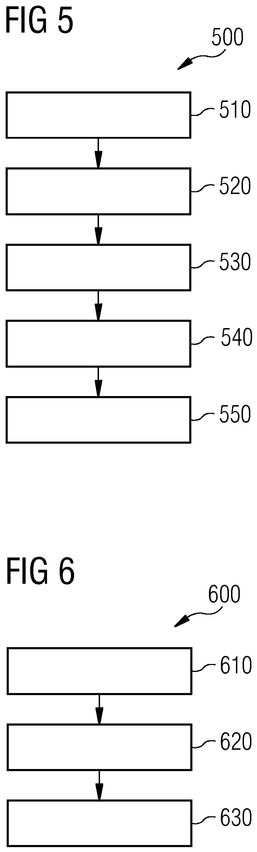

Fig. 5 shows a flow chart for illustrating a method which can be used for implementing the illustrated concepts in a node of a multi-hop network, e.g., in one of the above-mentioned nodes 110, 121, 122, 123, 124, 125, 126, 130, 201, 202, 203, 210, 221, 223, 224, 225, 230. The method may for example be implemented by execution of program code by one or more processors of the node. The program code can be stored in a memory of the node.

At block 510, the node may be provided with security policy information. As mentioned above, the security policy information may include at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information on the security state of the forwarding node, e.g., in terms of the patch level of the forwarding node; and information on a path monitoring capability required for a forwarding node on a secure multi-hop communication path, e.g., whether the forwarding node is allowed to make information on data communicated on the multi-hop communication path available to other nodes. The node may receive the security policy information from a control node, e.g., a node of a network management system, or from another node of the multi-hop network. In some scenarios, the security policy information may be integrity protected by a cryptographic integrity check function, e.g., by a cryptographic checksum, a digital signature, a cryptographic MAC, which may be based on a hash function or the like.

At block 520, the node stores information on one or more secure multi-hop communication paths in the multi-hop network, e.g., in the form of a whitelist. For this purpose, the node may determine the information on the one or more secure multi-hop communication paths by probing multi-hop communication paths through the multi-hop network and comparing information obtained by said probing to the security policy information provided at block 510, e.g., using the above-described learning process.

At block 530, the node may indicate at least a part of the determined information to another node of the multi-hop network or to a control node, e.g., such as a node of a network management system.

At block 540, the node may monitor communication of data on at least one multi-hop communication path and indicate information obtained by said monitoring to another node of the multi-hop network or to a control node.

At block 550, the node utilizes the information stored at block 520 to restrict the communication of data to the secure multi-hop communication paths. As a result, communication of data occurs only on a multi-hop communication path which, according to the stored information, was classified as being secure. The restriction to the secure multi-hop communication paths may involve that the node determines the multi-hop communication path travelled by a received data packet, and accepts the data packet as valid if the determined multi-hop communication path matches the stored information, e.g., corresponds to one of the multi-hop communication paths on the whitelist. Alternatively or in addition, the restriction to the secure multi-hop communication paths may involve that the node determines a candidate multi-hop communication path of a data packet to be sent from the node, e.g., using a conventional routing mechanism, and sends the data packet if the determined candidate multi-hop communication path matches the stored information, e.g., corresponds to one of the multi-hop communication paths on the whitelist.

Fig. 6 shows a flow chart for illustrating a method which can be used for implementing the illustrated concepts in a control node of a multi-hop network, e.g., in one of the above-mentioned nodes 150, 240. The method may for example be implemented by execution of program code by one or more processors of the control node. The program code can be stored in a memory of the control node.

At block 610, the control node determines information on one or more secure multi-hop communication paths through the multi-hop network, e.g., in the form of a whitelist.

At block 620, the control node provides the information on the one or more secure multi-hop communication paths to nodes of the multi-hop network, such as one or more of the above-mentioned nodes 110, 121, 122, 123, 124, 125, 126, 130, 201, 202, 203, 210, 221, 223, 224, 225, 230. This may involve that the control node provides security policy information to one or more of the nodes. The security policy information may then enable the nodes to determine at least a part of the information on the secure multi-hop communication paths, e.g., using the above-mentioned learning process.

The security policy information provided by the control node may include at least one of: identification information of a forwarding node on a secure multi-hop communication path, e.g., in terms of a network address or a machine certificate; information indicating an allowed geographical location of a forwarding node on a secure multi-hop communication path, e.g., in terms of a geographical region; information indicating a communication technology required to be supported by a forwarding node on a secure multi-hop communication path, e.g., in terms of a network technology, a communication protocol, or a transmission mode; information on a security capability required for a forwarding node on a secure multi-hop communication path, e.g., such as an encryption capability, an integrity protection capability, a replay protection capability, one or more required security protocols; information on a security state required for a forwarding node on a secure multi-hop communication path, e.g., in terms of a patch level of the forwarding node; and information on a path monitoring capability required for a forwarding node on a secure multi-hop communication path, e.g., whether the forwarding node is allowed to make information on data communicated on the multi-hop communication path available to other nodes. In some scenarios, the security policy information may be integrity protected by a cryptographic integrity check function, e.g., by a cryptographic checksum, a digital signature, a cryptographic MAC, which may be based on a hash function or the like.

At block 630, the control node may receive information from one or more nodes of the multi-hop network. The received information may be based on probing of multi-hop communication paths by the one or more nodes and/or on monitoring communication of data on at least one multi-hop communication path. The received information may be used as an additional input when determining the information on the one or more secure multi-hop communication paths at block 610.

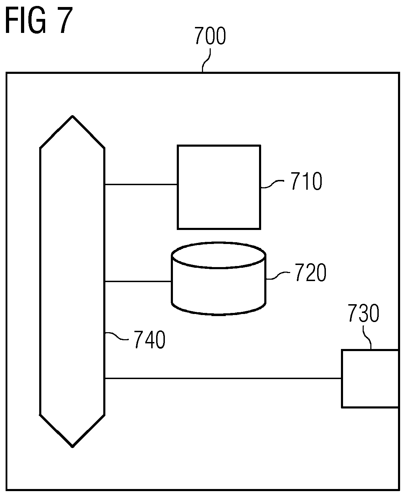

Fig. 7 shows a block diagram for schematically illustrating structures of a device 700. The device 700 may for example be used for implementing one the above-mentioned nodes 110, 121, 122, 123, 124, 125, 126, 130, 150, 201, 202, 203, 210, 221, 223, 224, 225, 230, 240. In the illustrated example, the device 700 includes at least one processor 710 and a memory 720. Further, the device 700 includes at least one data interface 730, which may be used for establishing a connection to one or more other nodes of the multi-hop network. The components of device 700, i.e., the at least one processor 710, the memory 720, and the at least one data interface 730 may for example be coupled to each other by a data bus 740 or similar internal communication infrastructure of the device 700. By execution of program code by the at least one processor 710, the device 700 may be configured to operate according to the above-described functionalities of the node 110, 121, 122, 123, 124, 125, 126, 130, 150, 201, 202, 203, 210, 221, 223, 224, 225, 230, 240.

It is to be understood that the above description of examples is intended to be illustrative and that the illustrated concepts are susceptible to various modifications. For example, the illustrated concepts could be applied to various types of multi-hop networks and various types of data to be communicated through the multi-hop network. Still further, the concepts may be used to enforce a variety of security requirements on a multi-hop communication path, without being limited to the above-mentioned examples of security requirements.

## Claims

1. A node (110, 121, 122, 123, 124, 125, 126, 130; 201, 202, 203, 210, 221, 223, 224, 225, 230; 700) for a multi-hop network, the node (110, 121, 122, 123, 124, 125, 126, 130; 201, 202, 203, 210, 221, 223, 224, 225, 230; 700) being configured to:
- store information on one or more secure multi-hop communication paths through the multi-hop network, and
- according to the stored information, restrict the communication of data to the secure multi-hop communication paths.

2. The node (110, 121, 122, 123, 124, 125, 126; 201, 202, 203, 210, 221, 223, 224, 225, 230; 700) according to claim 1, wherein the node (110, 121, 122, 123, 124, 125, 126; 201, 202, 203, 210, 221, 223, 224, 225, 230; 700) is configured to:
- determine at least a part of the information on the one or more secure multi-hop communication paths based on security policy information.

3. The node (110, 121, 122, 123, 124, 125, 126; 201, 202, 203, 210, 221, 223, 224, 225, 230; 700) according to claim 2, wherein the security policy information comprises at least one of: identification information of a forwarding node (121, 122, 123, 124, 125, 126; 221, 223, 224, 225, 230; 700) on a secure multi-hop communication path,
information indicating a secure geographical location of a forwarding node (121, 122, 123, 124, 125, 126; 221, 223, 224, 225, 230; 700) on a secure multi-hop communication path, information indicating a communication technology required to be supported by a forwarding node (121, 122, 123, 124, 125, 126; 221, 223, 224, 225, 230; 700) on a secure multi-hop communication path,
information on a security capability required for a forwarding node (121, 122, 123, 124, 125, 126; 221, 223, 224, 225, 230; 700) on a secure multi-hop communication path, information on a security state required for a forwarding node (121, 122, 123, 124, 125, 126; 221, 223, 224, 225, 230; 700 on a secure multi-hop communication path, and
information on a path monitoring capability required for a forwarding node (121, 122, 123, 124, 125, 126; 221, 223, 224, 225, 230; 700) on a secure multi-hop communication path.

4. The node (110, 121, 122, 123, 124, 125, 126; 201, 202, 203, 210, 221, 223, 224, 225, 230; 700) according to claim 3, wherein integrity of the security policy information is protected by a cryptographic integrity check function.

5. The node (110, 121, 122, 123, 124, 125, 126; 201, 202, 203, 210, 221, 223, 224, 225, 230; 700) according to any one of claims 2 to 4,
wherein the node (110, 121, 122, 123, 124, 125, 126; 201, 202, 203, 210, 221, 223, 224, 225, 230; 700) is configured to determine the information on the one or more secure multi-hop communication paths by probing multi-hop communication paths through the multi-hop network and comparing information obtained by said probing to the security policy information.

6. The node (110, 121, 122, 123, 124, 125, 126; 201, 202, 203, 210, 221, 223, 224, 225, 230; 700) according to claim 5, wherein the node (110, 121, 122, 123, 124, 125, 126; 201, 202, 203, 210, 221, 223, 224, 225, 230; 700) is configured to indicate at least a part of the determined information to control node (150; 240; 700) or to another node (110, 121, 122, 123, 124, 125, 126; 201, 202, 203, 210, 221, 223, 224, 225, 230; 700) of the multi-hop network.

7. The node (110, 121, 122, 123, 124, 125, 126; 201, 202, 203, 210, 221, 223, 224, 225, 230; 700) according to any one of the preceding claims,
wherein the node (110, 121, 122, 123, 124, 125, 126; 201, 202, 203, 210, 221, 223, 224, 225, 230; 700) is configured to:
- monitor communication of data on at least one multi-hop communication path, and
- indicate information obtained by said monitoring to a control node (150; 240; 700) or to another node (110, 121, 122, 123, 124, 125, 126; 201, 202, 203, 210, 221, 223, 224, 225, 230; 700) of the multi-hop network.

8. A control node (150; 240; 700) for a multi-hop network, the control node (150; 240; 700) being configured to:
- determine information on one or more secure multi-hop communication paths through the multi-hop network; and
- provide the information on the one or more secure multi-hop communication paths to nodes (110, 121, 122, 123, 124, 125, 126; 201, 202, 203, 210, 221, 223, 224, 225, 230; 700) of the multi-hop network.

9. The control node (150; 240; 700) according to claim 8, wherein the control node (150; 240; 700) is configured to provide security policy information to one or more of the nodes (110, 121, 122, 123, 124, 125, 126; 201, 202, 203, 210, 221, 223, 224, 225, 230; 700),
wherein the security policy information enables the nodes (110, 121, 122, 123, 124, 125, 126; 201, 202, 203, 210, 221, 223, 224, 225, 230; 700) to determine at least a part of the information on the one or more secure multi-hop communication paths.

10. The control node (150; 240; 700) according to claim 9, wherein the security policy information comprises at least one of: identification information of a forwarding node (121, 122, 123, 124, 125, 126; 221, 223, 224, 225, 230; 700) on a secure multi-hop communication path,
information indicating a secure geographical location of a forwarding node (121, 122, 123, 124, 125, 126; 221, 223, 224, 225, 230; 700) on a secure multi-hop communication path, information indicating a communication technology required to be supported by a forwarding node (121, 122, 123, 124, 125, 126; 221, 223, 224, 225, 230; 700) on a secure multi-hop communication path,
information on a security capability required for a forwarding node (121, 122, 123, 124, 125, 126; 221, 223, 224, 225, 230; 700) on a secure multi-hop communication path, information on a security state required for a forwarding node (121, 122, 123, 124, 125, 126; 221, 223, 224, 225, 230; 700) on a secure multi-hop communication path, and
information on a path monitoring capability required for a forwarding node (121, 122, 123, 124, 125, 126; 221, 223, 224, 225, 230; 700) on a secure multi-hop communication path.

11. The control node (150; 240; 700) according to claim 10, wherein integrity of the security policy information is protected by a cryptographic integrity check function.

12. The control node (150; 240; 700) according to any one of claims 8 to 11,
wherein the control node (150; 240; 700) is configured to:
- receive information from one or more nodes (110, 121, 122, 123, 124, 125, 126; 201, 202, 203, 210, 221, 223, 224, 225, 230; 700) of the multi-hop network, and
- determine the information on the one or more secure multi-hop communication paths based on the received information.

13. The control node (150; 240; 700) according to claim 12, wherein the received information is based on probing of multi-hop communication paths by the one or more nodes (110, 121, 122, 123, 124, 125, 126; 201, 202, 203, 210, 221, 223, 224, 225, 230; 700) and/or on monitoring communication of data on at least one multi-hop communication path by the one or more nodes (110, 121, 122, 123, 124, 125, 126; 201, 202, 203, 210, 221, 223, 224, 225, 230; 700).

14. A method of controlling communication of data in a multi-hop network, the method comprising:
- a node (110, 121, 122, 123, 124, 125, 126; 201, 202, 203, 210, 221, 223, 224, 225, 230; 700) of the multi-hop network storing information on one or more secure multi-hop communication paths through the multi-hop network, and
- according to the stored information, the node (110, 121, 122, 123, 124, 125, 126; 201, 202, 203, 210, 221, 223, 224, 225, 230; 700) restricting the communication of data to the one or more secure multi-hop communication paths.

15. A method of controlling communication of data in a multi-hop network, the method comprising:
- a control node (150; 240 ;700) determining information on one or more secure multi-hop communication paths through the multi-hop network; and
- the control node (150; 240 ;700) providing the information on the one or more secure multi-hop communication paths to nodes (110, 121, 122, 123, 124, 125, 126; 201, 202, 203, 210, 221, 223, 224, 225, 230; 700) of the multi-hop network.

## Amended claims

### Amended claims in accordance with Rule 137(2) EPC.

1. A node (110, 121, 122, 123, 124, 125, 126, 130; 201, 202, 203, 210, 221, 223, 224, 225, 230; 700) for a multi-hop network to communicate data, the node (110, 121, 122, 123, 124, 125, 126, 130; 201, 202, 203, 210, 221, 223, 224, 225, 230; 700) being configured to:
- be provided with security policy information,
- determine at least a part of information on one or more secure multi-hop communication paths by probing the multi-hop communication paths through the multi-hop network and comparing information obtained by said probing to the security policy information,
- indicate the at least a part of the determined information on the one or more secure multi-hop communication paths to a control node (150; 240; 700) of the multi-hop network,
- receive further information on the one or more secure multi-hop communication paths provided by the control node,
- store the received further information on one or more secure multi-hop communication paths through the multi-hop network, and
- according to the stored further information, restrict the communication of data to the secure multi-hop communication paths.

2. The node (110, 121, 122, 123, 124, 125, 126; 201, 202, 203, 210, 221, 223, 224, 225, 230; 700) according to claim 1, wherein the security policy information comprises at least one of: identification information of a forwarding node (121, 122, 123, 124, 125, 126; 221, 223, 224, 225, 230; 700) on a secure multi-hop communication path,
information indicating a secure geographical location of a forwarding node (121, 122, 123, 124, 125, 126; 221, 223, 224, 225, 230; 700) on a secure multi-hop communication path, information indicating a communication technology required to be supported by a forwarding node (121, 122, 123, 124, 125, 126; 221, 223, 224, 225, 230; 700) on a secure multi-hop communication path,
information on a security capability required for a forwarding node (121, 122, 123, 124, 125, 126; 221, 223, 224, 225, 230; 700) on a secure multi-hop communication path, information on a security state required for a forwarding node (121, 122, 123, 124, 125, 126; 221, 223, 224, 225, 230; 700 on a secure multi-hop communication path, and information on a path monitoring capability required for a forwarding node (121, 122, 123, 124, 125, 126; 221, 223, 224, 225, 230; 700) on a secure multi-hop communication path.

3. The node (110, 121, 122, 123, 124, 125, 126; 201, 202, 203, 210, 221, 223, 224, 225, 230; 700) according to claim 2, wherein integrity of the security policy information is protected by a cryptographic integrity check function.

4. The node (110, 121, 122, 123, 124, 125, 126; 201, 202, 203, 210, 221, 223, 224, 225, 230; 700) according to any one of claims 1 to 3,
wherein the node (110, 121, 122, 123, 124, 125, 126; 201, 202, 203, 210, 221, 223, 224, 225, 230; 700) is configured to additionally indicate the at least a part of the determined information on one or more secure multi-hop communication paths to another node (110, 121, 122, 123, 124, 125, 126; 201, 202, 203, 210, 221, 223, 224, 225, 230; 700) of the multi-hop network.

5. The node (110, 121, 122, 123, 124, 125, 126; 201, 202, 203, 210, 221, 223, 224, 225, 230; 700) according to any one of the preceding claims,
wherein the node (110, 121, 122, 123, 124, 125, 126; 201, 202, 203, 210, 221, 223, 224, 225, 230; 700) is configured to:
- monitor communication of data on at least one multi-hop communication path, and
- indicate information obtained by said monitoring to a control node (150; 240; 700) or to another node (110, 121, 122, 123, 124, 125, 126; 201, 202, 203, 210, 221, 223, 224, 225, 230; 700) of the multi-hop network.

6. A control node (150; 240; 700) for a multi-hop network, the control node (150; 240; 700) being configured to:
- provide security policy information to one or more nodes (110, 121, 122, 123, 124, 125, 126; 201, 202, 203, 210, 221, 223, 224, 225, 230; 700) of the multi-hop network, wherein the security policy information enables the one or more nodes (110, 121, 122, 123, 124, 125, 126; 201, 202, 203, 210, 221, 223, 224, 225, 230; 700) to determine at least a part of information on one or more secure multi-hop communication paths,
- receive the at least a part of information on the one or more secure multi-hop communication paths from the one or more nodes (110, 121, 122, 123, 124, 125, 126; 201, 202, 203, 210, 221, 223, 224, 225, 230; 700) of the multi-hop network, wherein the received at least a part of information is based on probing of multi-hop communication paths by the one or more nodes (110, 121, 122, 123, 124, 125, 126; 201, 202, 203, 210, 221, 223, 224, 225, 230; 700) and comparing information obtained by said probing to the security policy information,
- determine further information on the one or more secure multi-hop communication paths through the multi-hop network based on the received at least a part of information on the one or more secure multi-hop communication paths; and
- provide the determined further information on the one or more secure multi-hop communication paths to the one or more nodes (110, 121, 122, 123, 124, 125, 126; 201, 202, 203, 210, 221, 223, 224, 225, 230; 700) of the multi-hop network.

7. The control node (150; 240; 700) according to claim 6, wherein the security policy information comprises at least one of: identification information of a forwarding node (121, 122, 123, 124, 125, 126; 221, 223, 224, 225, 230; 700) on a secure multi-hop communication path,
information indicating a secure geographical location of a forwarding node (121, 122, 123, 124, 125, 126; 221, 223, 224, 225, 230; 700) on a secure multi-hop communication path, information indicating a communication technology required to be supported by a forwarding node (121, 122, 123, 124, 125, 126; 221, 223, 224, 225, 230; 700) on a secure multi-hop communication path,
information on a security capability required for a forwarding node (121, 122, 123, 124, 125, 126; 221, 223, 224, 225, 230; 700) on a secure multi-hop communication path, information on a security state required for a forwarding node (121, 122, 123, 124, 125, 126; 221, 223, 224, 225, 230; 700) on a secure multi-hop communication path, and information on a path monitoring capability required for a forwarding node (121, 122, 123, 124, 125, 126; 221, 223, 224, 225, 230; 700) on a secure multi-hop communication path.

8. The control node (150; 240; 700) according to claim 7, wherein integrity of the security policy information is protected by a cryptographic integrity check function.

9. The control node (150; 240; 700) according to any one of claims 6 to 8,
wherein the received information is based on monitoring communication of data on at least one multi-hop communication path by the one or more nodes (110, 121, 122, 123, 124, 125, 126; 201, 202, 203, 210, 221, 223, 224, 225, 230; 700).

10. A method of controlling communication of data in a multi-hop network, the method comprising:
- a node (110, 121, 122, 123, 124, 125, 126; 201, 202, 203, 210, 221, 223, 224, 225, 230; 700) of the multi-hop network being provided with security policy information,
- the node (110, 121, 122, 123, 124, 125, 126; 201, 202, 203, 210, 221, 223, 224, 225, 230; 700) determining at least a part of information on one or more secure multi-hop communication paths by probing the multi-hop communication paths through the multi-hop network and comparing information obtained by said probing to the security policy information,
- indicating the at least a part of the determined information on the one or more secure multi-hop communication paths to a control node (150; 240; 700) of the multi-hop network,
- receiving further information on the one or more secure multi-hop communication paths provided by the control node,
- storing the received further information on one or more secure multi-hop communication paths through the multi-hop network, and
- according to the stored further information, the node (110, 121, 122, 123, 124, 125, 126; 201, 202, 203, 210, 221, 223, 224, 225, 230; 700) restricting the communication of data to the one or more secure multi-hop communication paths.

11. A method of controlling communication of data in a multi-hop network, the method comprising:
- a control node (150; 240; 700) providing security policy information to one or more nodes (110, 121, 122, 123, 124, 125, 126; 201, 202, 203, 210, 221, 223, 224, 225, 230; 700) of the multi-hop network, wherein the security policy information enables the one or more nodes (110, 121, 122, 123, 124, 125, 126; 201, 202, 203, 210, 221, 223, 224, 225, 230; 700) to determine at least a part of information on one or more secure multi-hop communication paths,
- the control node (150; 240; 700) receiving the at least a part of information on the one or more secure multi-hop communication paths from the one or more nodes (110, 121, 122, 123, 124, 125, 126; 201, 202, 203, 210, 221, 223, 224, 225, 230; 700) of the multi-hop network, wherein the received at least a part of information is based on probing of multi-hop communication paths by the one or more nodes (110, 121, 122, 123, 124, 125, 126; 201, 202, 203, 210, 221, 223, 224, 225, 230; 700) and comparing information obtained by said probing to the security policy information,
- the control node (150; 240 ;700) determining further information on the one or more secure multi-hop communication paths through the multi-hop network based on the received at least a part of information on the one or more secure multi-hop communication paths; and
- the control node (150; 240 ;700) providing the determined further information on the one or more secure multi-hop communication paths to the one or more nodes (110, 121, 122, 123, 124, 125, 126; 201, 202, 203, 210, 221, 223, 224, 225, 230; 700) of the multi-hop network.
